**Europäisches Patentamt**

**European Patent Office**

**Office européen des brevets**

(11) Publication number: **0 132 911**
**B1**

# (12) EUROPEAN PATENT SPECIFICATION

(45) Date of publication of patent specification: **29.06.88**

(51) Int. Cl.⁴: **G 21 C 3/18, G 21 C 3/16**

(21) Application number: **84302216.1**

(22) Date of filing: **30.03.84**

(54) **Annular fuel rods for nuclear reactors.**

(30) Priority: **06.05.83 US 492081**

(43) Date of publication of application:
**13.02.85 Bulletin 85/07**

(45) Publication of the grant of the patent:
**29.06.88 Bulletin 88/26**

(84) Designated Contracting States:
**CH DE FR GB IT LI**

(56) References cited:
**DE-A-3 318 138**
**FR-A-1 525 099**
**US-A-3 022 240**
**US-A-3 137 636**
**US-A-3 179 572**
**US-A-3 275 525**
**US-A-4 273 616**

(73) Proprietor: **THE BABCOCK & WILCOX COMPANY**
**1010 Common Street P.O. Box 60035**
**New Orleans Louisiana 70160 (US)**

(72) Inventor: **Pettus, William G.**
**Rt. 2, Box 202**
**Monroe Virginia 24574 (US)**

(74) Representative: **Cotter, Ivan John et al**
**D. YOUNG & CO. 10 Staple Inn**
**London WC1V 7RD (GB)**

Courier Press, Leamington Spa, England.

EP 0 132 911 B1

## Description

This invention relates to annular fuel rods for nuclear reactors.

Fuel rods in a pressurised water nuclear reactor are typically stacks of uranium dioxide pellets which are contained in an outer cladding of Zircaloy or other material. The fuel rods are formed into bundles comprising a fuel element. Each fuel element also contains a top and bottom end plate as well as several spacer grids along the axial length of the fuel element to hold the fuel rods in place.

For a number of years, the use of annular fuel pellets rather than the conventional solid fuel pellet has been studied. Such an annular fuel pellet is typified by a cross-sectional configuration in which the central part or region of the pellet is hollow. The use of annular fuel pellets offers a number of advantages over the use of a conventional solid fuel pellet. Firstly, a pellet with a central void or hollow region reduces the maximum fuel temperature. This can provide extended life of the fuel rods and therefore reduction in cost of materials and time to replace spent fuel rods. Secondly, gaseous fission products accumulate within the fuel rod during the life of the fuel. The use of a central void region within the fuel rod acts as a plenum for these gaseous products.

US—A—3 275 525 discloses an annular fuel rod for a nuclear reactor, wherein the hollow fuel pellets are stacked in a cladding tube and form a central region within the fuel rod.

Along with the advantages of the use of an annular fuel pellet, certain problems also arise. One of the main problems in connection with the use of an annular pellet is the possibility that fragments of the nuclear fuel may break off internally and fall into the central void area. These fragments may fall to the bottom of their respective fuel rod and accumulate there. Alternatively, larger fragments may lodge somewhere along the axial length of the central void region. In either event, these fragments or debris may cause power peaking problems, and they would reach a very high temperature and possibly melt due to poor heat transfer. This fragmentation problem is caused by thermal cycling during operation of the nuclear reactor which can result in erosion of the pellets. As ancillary concern is the creation of uncertainty in estimating system conditions after such fragmentation has occurred.

U.S. Patent No. US—A—4 273 616 discloses an arrangement in which spacer plugs are located at the fuel assembly grid elevations along the fuel rod. These plugs physically trap or catch pellet debris to avoid excessive power peaking and power distribution uncertainties. However, this arrangement inherently allows for redistribution of fissile material axially within the fuel rod and a reaccumulation of debris along the upper surface of each spacer plug. It also fails to prevent further erosion and fragmentation of the annular fuel pellets.

The present invention endeavors to solve or at least alleviate the above-discussed problems that attend the use of annular fuel pellets by the installation of a porous plug in the central region of the fuel rod in order to prevent the breaking off and relocation of fuel fragments.

The plug preferably comprises a refractory fibre made from such materials as zirconium oxide, alumiunium oxide, or titanium dioxide. The porous plug may take the form of a packed fibre, braided rope, or other suitable structure to permit the installation of the plug into the central void region of the nuclear fuel pellets and the packing of the central region to prevent fragments and debris generated on the internal edge of each fuel pellet from falling and relocating within the fuel rod. The porosity of the central plug will provide a plenum area for gases produced by the fission reactions occurring during operation of the reactor. The plug may also act as a getter for fission product gases, thereby reducing internal pressure, reducing corrosion problems, and reducing release potential. Thus, the use of a porous plug will at least partially prevent fuel relocation that could cause reactivity changes, power distribution changes, hot spots and increased gas temperature and pressure. It will additionally act as a physical restraint to fuel chips or flakes on the inner surface of the pellets and thereby maintain heat transfer to the pellets. An additional advantage of the use of porous plug in this manner is that it allows the use of fuel pellets with thinner annular regions, thus extending the allowable range of void fraction, i.e. the volume of the central void region as compared with the total volume of the fuel rod, enabling optimal fuel design.

The invention will now be further described, by way of illustrative and non-limiting example, with reference to the accompanying drawing, in which like reference numerals designate like or corresponding parts throughout, and in which:

Figure 1 is a perspective, cut-away view of a segment of a fuel rod comprising an annular pellet stack;

Figure 2 is a perspective, cut-away view of the fuel rod segment with a typical chipped inner surface; and

Figure 3 is a perspective, cut-away view of a segment of a fuel rod embodying the present invention comprising an annular pellet stack with a porous plug in the central void region thereof.

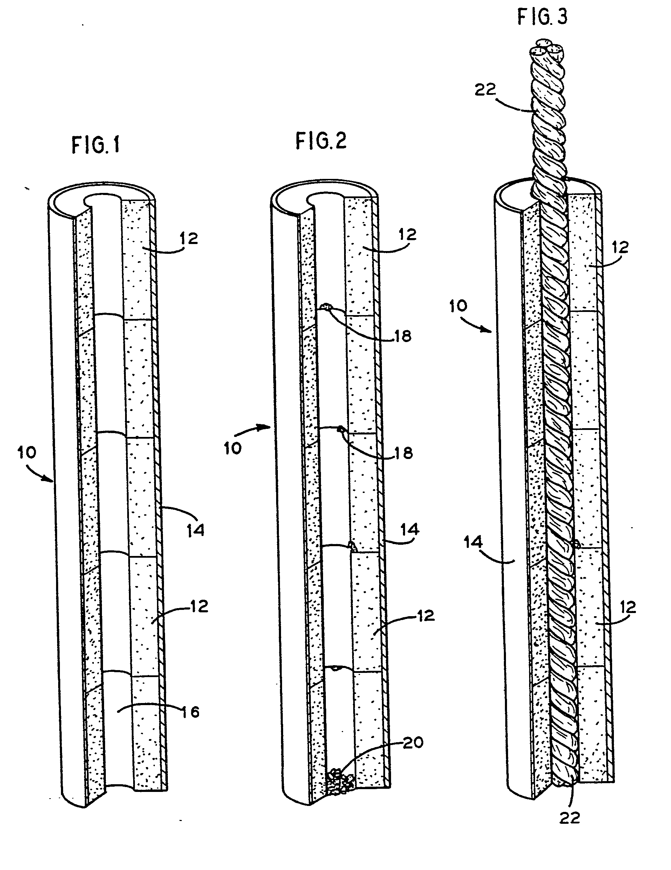

Figure 1 shows a fuel rod segment 10 in which a stack of annular pellets 12 is encased in an outer cladding 14. The fuel pellets 12 are made from any suitable material, typically uranium dioxide. The cladding 14 is typically made from zircaloy. A central void region 16 is defined by the axially stacked annular fuel pellets 12 so that a nuclear reactor fuel rod embodying the present invention and incorporating the structure of Figure 1 will have a central region running axially along the centre of the fuel rod. The volume fraction of the central region 16 is about 10% in the conventional art.

Figure 2 shows the fuel rod segment 10 of Figure 1 after fragmentation and breaking off of fuel material from the inner surface of one or more of the annular fuel pellets 12. Chipped areas 18 represent locations where fuel material has become dislocated from its original site within the fuel pellet and either has lodged further down the central region 16 of the fuel rod segment 10 or else has fallen into the bottom of the fuel rod and accumulated as fuel debris 20. Such redistribution of fuel within a fuel rod can cause reactivity changes, and hot areas which reduce the life of the fuel rod and make power distribution estimates more unpredictable.

Figure 3 shows a fuel rod segment 10 embodying the invention in which a porous plug 22 has been installed in the central region 16 prior to operation of the nuclear reactor. The porous plug 22 may be fabricated of a high temperature or ceramic fibre or other suitable material. Figure 3, for example, illustrates a close fitting rope on which the annular fuel pellets 12 are strung. The plug 22 is designed to have sufficient porosity to accommodate gas produced the fuel pellets within the fuel rod over the lifetime of the fuel, and to exert sufficient pressure against the inner surface of the fuel rod to prevent fuel fragments and chips from breaking away from the surface and being relocated. In addition to the advantages already described, the use of such a porous plug mitigate safety and licensing concerns associated with the internal void regions in nuclear fuel, and provide an alternative way of distributing burnable poisons, for example gadolinium oxide in the nuclear fuel.

In addition to the use of a close fitting rope, various alternative physical designs for the porous plug may be utilised. For example, packed fibres, twisted strand rope, felt cylinders, loose or compacted fibres, and low density, high porosity solid rods may be utilised.

The porous plug should be composed of a refractory material that is compatible with nuclear fuel and cladding at operating temperatures and is not neutronically detrimental to the system. A number of ceramic materials that satisfy these criteria are available in fibre form and can be spun and woven as a textile. Zirconium oxide fibres, such as those distributed for example by Zircar Products, Inc., are very suitable for use as a porous plug.

Aluminium oxide fibres such as SAFFIL, a product of Imperial Chemical Industries Limited, may also be used for the porous plug. Titanium dioxide, yttrium oxide, hafnium oxide, ceric oxide, tantalum oxide, thorium dioxide, uranium dioxide, gadonlimium oxide, and graphite are other substances suitable for the porous plug. Mixtures of these and other materials may be also be used for the porous plug.

## Claims

1. An annular fuel rod for a nuclear reactor, wherein hollow fuel pellets (12) are stacked in a cladding tube (14) and form a central region (16) within the fuel rod, characterised by a porous plug (22) installed in the central region (16) of the fuel rod in order to prevent the breaking off and relocation of fuel fragments.

2. A fuel rod according to claim 1, wherein the porous plug (22) takes the form of a packed fibre.

3. A fuel rod according to claim 1, wherein the porous plug (22) takes the form of a braided rope.

4. A fuel rod according to claim 1, wherein the porous plug (22) takes the form of a rope of twisted strands.

5. A fuel rod according to claim 1, wherein the porous plug (22) takes the form of a high porosity, low density solid rod.

6. A fuel rod according to claim 1, wherein the porous plug (22) takes the form of a felt cylinder.

7. A fuel rod according to any one of the preceding claims, wherein the porous plug comprises a refractory fibre selected from aluminium oxide, zirconium oxide, titanium dioxide, yttrium oxide, hafnium oxide, ceric oxide, tantalum oxide, thorium dioxide, uranium dioxide, gadolinium oxide, graphite, and mixtures thereof.

## Patentansprüche

1. Ringförmer Brennstoffstab für einen Kernreaktor, bei dem hohle Brennstoffgranalien (12) in ein Brennstoffhülsenrohr (14) übereinander gestapelt sind und einen Mittelbereich (16) in dem Brennstoffstab bilden, gekennzeichnet durch einen porösen Stopfen (22), der in dem Mittelbereich (16) des Brennstoffstabes angeordnet ist, um das Wegbrechen und die Verlagerung von Brennstoffbruchstücken zu verhindern.

2. Brennstoffstab nach Anspruch 1, bei dem der poröse Stopfen (22) die Form einer Faserpackung hat.

3. Brennstoffstab nach Anspruch 1, bei dem der poröse Stopfen (22) die Form eines geflochtenen Seiles hat.

4. Brennstoffstab nach Anspruch 1, bei dem der poröse Stopfen (22) die Form eines Seiles mit gezwirnten Strängen hat.

5. Brennstoffstab nach Anspruch 1, bei dem der poröse Stopfen (22) die Form eines festen Stabes mit großer Prösität und niedriger Dichte hat.

6. Brennstoffstab nach Anspruch 1, bei dem der poröse Stopfen (22) die Form eines Filzzylinders hat.

7. Brennstoffstab nach einem der vorausgehenden Ansprüche, bei dem der poröse Stopfen eine hitzebeständige Faser umfaßt, die unter Aluminiumoxid, Zirkoniumoxid, Titandioxid, Yttriumoxid, Hafniumoxid, Ceroxid, Tantaloxid, Thoriumdioxid, Urandioxid, Gadoliniumoxid, Graphit und Gemischen hiervon ausgewählt ist.

## Revendications

1. Barre de combustible annulaire pour réacteur nucléaire, dans laquelle des pastilles de combustible creuses (12) sont empilées dans un tube de gainage (14) et définissent une région centrale (16) au sein de la barre de combustible, caractérisée par un tampon poreux (22) posé dans la région centrale (16) de la barre de combustible afin d'empêcher que des fragments de combustible ne se détachent et ne se replacent ailleurs.

2. Barre de combustible selon la revendication 1, dans laquelle le tampon poreux (22) se présente sous forme de fibre tassée.

3. Barre de combustible selon la revendication 1, dans laquelle le tampon poreux (22) se présente sous forme de corde tressée.

4. Barre de combustible selon la revendication 1, dans laquelle le tampon poreux (22) se présente sous forme de torons retors.

5. Barre de combustible selon la revendication 1, dans laquelle le tampon poreux (22) se présente sous forme de tige pleine fortement poreuse à faible densité.

6. Barre de combustible selon la revendication 1, dans laquelle le tampon poreux (22) se présente sous forme de cylindre en feutre.

7. Barre de combustible selon l'une quelconque des revendications précédentes, dans laquelle le tampon poreux est constitué par une fibre réfractaire choisie parmi l'oxyde d'aluminium, l'oxyde de zirconium, le dioxyde de titane, l'oxyde d'yttrium, l'oxyde de hafnium, l'oxyde cérique, l'oxyde de tantale, le dioxyde de thorium, le dioxyde d'uranium, l'oxyde de gadolinium, le graphite et leurs mélanges.

FIG.1    FIG.2    FIG.3